# EUROPEAN PATENT SPECIFICATION

(11) **EP 2 225 177 B1**
(45) Date of publication and mention of the grant of the patent: **03.08.2011**
(21) Application number: 08858880.1
(22) Date of filing: 09.12.2008
(51) Int. Cl.: C01G 45/06, C01B 7/20

(54) **METHOD FOR PREPARING MANGANESE TETRAFLUORIDE**
VERFAHREN ZUR HERSTELLUNG VON MANGANTETRAFLUORID
PROCÉDÉ DE PRÉPARATION DE TÉTRAFLUORURE DE MANGANÈSE

(30) Priority: 11.12.2007 EP 07122858
(43) Date of publication of application: 08.09.2010
(73) Proprietor: Solvay Fluor GmbH, 30173 Hannover (DE)
(72) Inventor: SESEKE-KOYRO, Ulrich, 30916 Isernhagen (DE); GARCIA-JUAN, Placido, 30173 Hannover (DE); PALSHERM, Stefan, 30890 Barsinghausen (DE); SCHULZ, Alf, 30900 Wedemark (DE)
(74) Representative: Mross, Stefan P.M.
(86) International application number: PCT/EP2008/067085
(87) International publication number: WO 2009/074560

(56) References cited:
- WO-A-2006/028271
- WO-A-2006/033474
- WO-A-2006/033480
- RAKOV E G ET AL: "MANUFACTURE OF PURE GASEOUS FLUORINE" CHEMICAL ABSTRACTS, AMERICAN CHEMICAL SOCIETY, US, vol. 110, no. 14, 3 April 1989 (1989-04-03), page 169, XP000056099 ISSN: 0009-2258

## Description

The invention concerns a process for the preparation of manganese tetrafluoride and its use for the preparation of purified elemental fluorine.

Manganese tetrafluoride which can be prepared by fluorination of manganese difluoride or manganese trifluoride with elemental fluorine is a compound which is useful, for example, for the preparation of elemental fluorine, cf. WO 2006/033474. While it is stable at room temperature, it splits off elemental fluorine when heated. Manganese trifluoride is formed which then can be fluorinated to manganese tetrafluoride again. Manganese tetrafluoride thus can be considered a carrier for elemental fluorine. The advantage is that elemental fluorine can be produced locally where it is needed. Further, the combination of steps providing manganese trifluoride, fluorinating it to manganese tetrafluoride and setting elemental fluorine free from that compound can be used to provide purified fluorine.

The preparation of manganese tetrafluoride is principally known. For example, solid manganese difluoride or manganese trifluoride can be reacted with elemental fluorine in a solid/gas reaction to form manganese tetrafluoride. As described in WO 2006/033480, if one starts from manganese difluoride, this compound is in first step treated with an inert gas with a dew point of -40°C or below at a temperature of 100 - 400°C. Applying a temperature of 300 - 400°C makes drying more effective. The fluorination reaction proceeds on the surface of the starting material and is accompanied by the sintering of the particles which obstructs the penetration of fluorine into the particles. Consequently, the stoechiometric ratio of manganese : fluorine of 1:4 is difficult to achieve. Said international patent application discloses a process in which the solid/gas reaction described before is performed under heating and pressure while continuously or discontinuously, the particles are comminuted (crushed or ground). This can be made by using a ball mill.

Problem of the present invention is to provide a simple and effective process to produce manganese tetrafluoride with a high degree of fluorination. Another object of the present invention is to provide a simplified process for the preparation of purified fluorine.

These and other objects are achieved by the invention as outlined in the claims.

The process according to the present invention provides for the preparation of manganese tetrafluoride by reacting solid manganese difluoride and/or manganese trifluoride particles with elemental fluorine wherein during the reaction, particle surfaces are rendered "fresh". This is achieved essentially without comminuting particles. In the context of the present invention, the term "essentially without comminuting particles" means that the particles are not intentionally crushed, ground, pulverized or milled, and the average particle size does not change significantly, be it to a larger average size, be it to a smaller average size, during the process. Preferably, the average particle size of the fluorinated particles compared to the average particle size before fluorination lies in a range of 1.5:1 1 to 1:1.5. To achieve this, the particles are treated preferably by mechanical means which prevent them to agglomerate and which provide fresh surfaces for contact with fluorine. Means are for example movable components inside the reactor which, when moving, agitate the particles therein and thus prevent them to agglomerate and, by mechanical impact, render "fresh" surfaces of the particles. The term "fresh" means that coatings of manganese tetrafluoride on the surface are at least partially removed or made porous so that further fluorine can diffuse more easily into the particle and react with the fresh surface or unreacted manganese fluoride. While movable mechanical means are the preferred embodiment, other means are considered to be applicable, e.g. irradiation with ultrasound. Alternatively, reactor with fixed components such as metal plates might be rotated at sufficient speed so that the impact of the particles hitting the plates inside the reactor provides fresh surfaces. The impact between the particles and the movable or fixed means is high enough to prevent agglomeration, sintering and vitrification and to achieve a good degree of fluorination, but is not so powerful or intense that the particles crush.

Preferred mechanical means are means used for mixing, preferably stirrers or mixers with helical means, e.g. helical stirrers or agitators, and especially preferably mixer screws. Helical stirrers and especially mixer screws are very advantageous because the manganese fluoride is not only agitated horizontally, but also vertically which appears to have a positive effect on the effectivity of the contact with elemental fluorine. The means can be actuated mechanically, for example, by motor-driven shafts. Alternatively, they may be actuated magnetically. The magnetic actuation can be advantageous, e.g., because no seals are needed.

According to a preferred embodiment of the present invention, a process for the preparation of manganese tetrafluoride by reacting solid manganese difluoride and/or manganese trifluoride particles with elemental fluorine is provided wherein during the reaction, particle surfaces are rendered fresh by applying a mechanical impact wherein the mechanical impact is achieved by a stirrer or a mixer screw.

Manganese difluoride or manganese trifluoride can be applied as starting material. Sometimes, in manganese fluoride, at least in view of manganese trifluoride, the molar ratio between manganese and fluorine is not always stoechiometric, especially when manganese fluoride is used which has been obtained from splitting off fluorine from manganese tetrafluoride. Such manganese fluoride may contain manganese trifluoride, residual manganese tetrafluoride, even some manganese difluoride. Any non-stoichiometric manganese fluoride which can react with elemental fluorine to form manganese tetrafluoride is suitable as starting material. The starting material can thus be characterized as MnFₓ with 2 ≤ x < 4 ; preferably, x is equal to or lower than about 3.

Manganese difluoride may be used as a starting material. It is obtainable by the reaction of manganese (II) salts, for example, manganese dichloride, manganese oxide or manganese carbonate with HF and subsequent drying in an oven (preferably an evacuated oven). Manganese carbonate is the preferred starting material for manganese difluoride. If the starting material contains water, it is preferred to dry it before performing the reaction of the present invention, for example, by heating it in an oven, e.g. an evacuated oven or under passing of inert gas through it, to a temperature up to 400°C.

Manganese trifluoride is also suitable as starting material. It can be obtained by reaction of manganese difluoride with elemental fluorine. Another source for manganese trifluoride is the residue which is obtained when manganese tetrafluoride is heated to split off elemental fluorine. The amount of fluorine is dependant from the degree of fluorination of the starting material.
The reaction equation for manganese difluoride is

MnF₂ + F₂ → MnF₄ (I)

The reaction equation for manganese trifluoride is

MnF₃ + ½ F2 → MnF4 (II)

Preferably, the amount of fluorine corresponds approximately to that amount needed to fluorinate the manganese fluoride starting material to form manganese tetrafluoride. Preferably, the molar ratio of elemental fluorine needed to convert the manganese fluoride into manganese tetrafluoride is equal to or greater than 0.9:1. It is preferably equal to or lower than 1.1:1. For safety considerations, it is preferably equal to or lower than 1:1. A possible source for fluorine useful in the process of the present invention is commercially available fluorine stored under pressure in a gas bottle. Another source is elemental fluorine obtained in situ by the electrochemical preparation from HF. The fluorine applied can be purified prior to the reaction. For example, it can be contacted with alkali metal fluoride, e.g. KF or NaF. Thereby, HF which may be comprised is removed.

The particle size of the starting material is variable. Particles with a size of equal to or greater than 0.1 µm are suitable. Particles with a size equal to or lower than 5 millimeters are suitable. Preferably, the particle size is equal to or greater than 1 µm. Preferably, the particle size is equal to or lower than 0.5 mm. More preferably, the particle size is equal to or lower than 200 µm. Of course, insignificant amounts, e.g. up to 5 % by weight of the particles, may lie outside the respective preferred ranges.

The reaction temperature for the fluorination reaction is variable. Preferably, it is equal to or higher than 160°C, especially it is equal to or higher than 180°C. Preferably, it is equal to or lower than 330°C, especially it is equal to or lower than 320°C.

The pressure during fluorination in the reactor is preferably equal to or higher than 2 bars (abs.). Preferably, it is equal to or higher than 3 bars (abs.). Although it could be higher, e.g. up to 50 bars (abs.) or even more, preferably, it is equal to or lower than 20 bars (abs.). More preferably, it is lower than 10 bars (abs). More preferably, it is lower than 8 bars (abs.). Still more preferably, it is lower than 7 bars (abs.). A highly preferred range is 4 to 6.5 bars (abs).

It is known to the expert that a complete fluorination of manganese fluoride to produce MnF₄ is difficult to achieve. In the solid-gas reaction, often the core of the solid manganese fluoride particles is not perfectly susceptible to the elemental fluorine, and thus, manganese "tetra"fluoride is obtained with an atomic ratio between Mn and fluorine which is not exactly 1:4 (i.e. it still contains manganese trifluoride). Often, longer reaction times serve to produce a product which is closer to the theoretical stoichiometric ratio of 1:4. Nevertheless, also a product which does not exactly correspond to that theoretical stoichiometric ratio is a suitable product because the manganese tetrafluoride contained therein releases elemental fluorine, of course. Consequently, in the process of the present invention, the fluorination reaction is performed until the desired degree of fluorination is achieved. Preferably, it is performed until manganese fluoride is prepared of formula MnFₓ wherein x is equal to or higher than 3.75, preferably equal to or higher than 3.9. For the sake of simplicity, MnFₓ wherein x is equal to or greater than 3.75 is denoted "manganese tetrafluoride".

The mechanical impact on the particles to render fresh surfaces is exerted at least during a part of the reaction. For example, it can be exerted intermittently. Preferably, it is exerted during at least 50 % of the fluorination reaction time. More preferably, it is exerted during at least 70 %, especially preferably during at least 90 % of the fluorination reaction time. As mentioned above, the mechanical impact can be effected by stirrers or mixer screws.

The preparation of manganese tetrafluoride can be performed in one single step, be it using manganese difluoride or manganese trifluoride as a starting material. It is possible to interrupt the preparation process, for example, to analyze the degree of fluorination.

The process of the present invention can be used to produce manganese tetrafluoride which is especially suitable, as described above, as a carrier for elemental fluorine which can be released by heating the manganese tetrafluoride produced.

This embodiment of a process according to the present invention for the preparation of elemental fluorine provides that manganese difluoride and/or manganese trifluoride is reacted in a step a) with elemental fluorine as described above to form manganese tetrafluoride, and in a subsequent step b) which can be performed distinct from step a), elemental fluorine is released from the manganese tetrafluoride prepared in step a), and manganese trifluoride is formed. The term "which can be performed distinct from step a)" means that, for example, the fluorination step a) can be performed in a producing factory, while step b) can be performed at the site of use. Alternatively, the fluorination step a) can be performed at a certain time, while step b) might be performed later, e.g. at the time fluorine is needed. Accordingly, steps a) and b) may, but must not be performed immediately after one another at the same locality.

Of course, the manganese trifluoride formed in step b) can be subjected to another step a) to form manganese tetrafluoride, which, in turn, can be used to release elemental fluorine. Steps a) and b) can be performed consecutively many times after the other without any decrease in productivity. It has to be noted that the sequence of steps a) and b) must not necessarily start with step a). It is possible to start with manganese tetrafluoride obtained by any process, perform step b) with it, then perform step a) according to the invention, and so on. It is likewise possible that among a multitude of steps providing manganese tetrafluoride and releasing elemental fluorine, only one fluorination step is performed according to step a), or a certain number of fluorination steps are performed according to step a), but not all. In a preferred embodiment, step a) according to the fluorination process of the present invention is performed at least four times, step b) is performed at least five times. In a very preferred embodiment, steps a) and b) are performed at least five times consecutively.

The sequence of steps a) concerning fluorination and step b) concerning release of elemental fluorine can also be applied to provide purified fluorine. Impurities which can be removed from fluorine by this purification process are especially HF and oxygen. Manganese difluoride or manganese trifluoride is reacted, as described above, in step a) with elemental fluorine which has to be purified. Subsequently, in an intermediate step, the gas space which comprises the impurities around the produced manganese tetrafluoride in the reactor is evacuated. The impurities which have not reacted with manganese fluoride are removed during this evacuation step. Subsequently, step b) as described above is performed wherein purified in the reactor elemental fluorine is provided by splitting it off from the manganese tetrafluoride. The gas space around the manganese tetrafluoride may be the internal volume of the reactor wherein it was prepared, or it may be a container which comprises it. The evacuation can be effected by a vacuum pump. The lower the pressure, the higher is generally the degree of purification. Also here, steps a) and b) can be performed distinct in view of locality or time as described above.

The process of the present invention can also be applied to fluorinate spent manganese trifluoride as reaction product after the application of manganese tetrafluoride for production of elemental fluorine (be it purified elemental fluorine, as described above, or not).

If desired, two or more reactors with manganese fluoride can be provided which are arranged parallel to each other. A first reactor or a group of first reactors for producing manganese tetrafluoride are operated ; when the desired degree of fluorination of the manganese fluoride is achieved, the flow of fluorine gas to the first reactor or first set of reactors is stopped, and directed to the second reactor or second set of reactors. The manganese tetrafluoride of the first set can then be removed and new manganese fluoride can be introduced to later resume the reaction with fresh elemental fluorine. This allows a continuous process.

The manganese tetrafluoride from the switched off reactor or reactors can be either removed and applied elsewhere for production of purified elemental fluorine, simply by heating it, or it can be heated directly in the reactor so that purified elemental fluorine is released and can be either stored or recycled to a process for further use. After fluorine release, the formed manganese fluoride can be used again for absorbing fluorine.

For the expert, it is evident that elemental fluorine is a very aggressive substance. Accordingly, it is preferred to use fluorine-resistant materials for those parts of the apparatus which come into contact with it. Suitable fluorine-resistant materials are known. Useful materials are nickel, nickel alloys, for example, Inconel or Monel. It also possible to use apparatus coated with or made totally or partially from fluorine-resistant materials. Suitable polymers are for example fluorinated polymers, e.g., polytetrafluoroethylene or its copolymers with fluorinated propylene or chlorofluoroalkenes.

The process according to the present invention has several advantages over the processes of the prior art. It allows the manufacture of manganese tetrafluoride at comparably low pressure and comparably low temperature, and the mechanical impact on the particles to be fluorinated is smaller than in the state of the art. Consequently, corrosion and wear in the apparatus is reduced. It obviates the need to interrupt the fluorination process to comminute agglomerates.

Another advantage is that the particle size remains essentially the same during consecutive steps of fluorination, fluorine release, refluorination, another fluorine release and so on. Consequently, reaction conditions must not be adapted to fluctuations in particle size.

The following examples are intended to explain the invention in further detail without intention to limit it.

### Examples

### Apparatus :

The apparatus used was a nickel reactor with an internal volume of 380 ml. It was provided with a magnet coupled mixer screw made from nickel. When rotated, it acts as a stirrer causing the particles to ascend within the diameter of the screw and to descend along the outer side of it. The mixer screw rotated at 30 rpm. The apparatus contained an inlet line for F₂ and N₂, respectively, which was connected, via valves and a NaF column, with storage bottles for these gases. The reactor further comprised an outlet connected, via a scrubber, to an exhaust line. The reactor also contained an external heating system.

### Example 1 : Preparation of manganese difluoride

Manganese carbonate was reacted with aqueous HF to form manganese difluoride. The reaction product was filtered off, dried in an oven at 180°C at reduced pressure for 12 hours and then ground. The water content amounted to around 0.5 to 1 % by weight. The identity of the substance was "confirmed by XRD (X ray diffraction) spectroscopy.

### Example 2 : Intermittent preparation of manganese tetrafluoride

250 g of manganese difluoride prepared in example 1 were transferred into the reactor. The reactor was evacuated and the mixer screw switched on to rotate with a speed of 30 rpm. The reactor was heated up to about 400°C while passing a stream (5 1/h) of inert gas for 18 hours through the reactor. Thereafter, the weight of manganese difluoride in the reactor was about 247g. After evacuation, elemental fluorine was slowly let into the reactor through an inlet line. The pressure in the line was regulated such that the pressure in the line rose to around 5.2 bars (abs.). The temperature of the reactor was brought to about 174°C ; pressure and temperature in the reactor were continuously monitored. Then, the reactor weight was determined and compared with the weight before fluorine introduction. According to the weight increase, the obtained product was calculated to be MnF_{2,55}. The reactor was then heated up to 200°C, and again fluorine was introduced until a pressure of 5.3 bars (abs.) was achieved in the reactor. Then, the reactor was kept at 200°C and 5.3 bars (abs.) for about 6 hours. The reactor was then evacuated. The weight increase indicated a composition of formula MnF_{2,97}. Now, the temperature was increased to 250°C, and again, fluorine was slowly introduced into the reactor until the final pressure in the reactor amounted to about 5.3 bars (abs.). For 6 hours, the reactor was then kept under these conditions of pressure and temperature. The composition, as calculated from the mass difference, corresponded now to MnF_{3,66}. The system was again evacuated, heated to 300°C, fluorine was allowed slowly into the reactor until a final pressure of 5.3 to 5.5 bars (abs.) was achieved in the reactor, and the reactor kept under these conditions for 8 hours. After evacuation, the composition could be calculated by the mass difference to be MnF_{3.89}. Its identity was confirmed by XRD measurements.

### Example 3 : Continuous process for the preparation of manganese tetrafluoride

247 g of manganese difluoride dried overnight at 150°C under vacuum were introduced into the reactor and the mixer screw switched on to rotate at 30 rpm. The reactor was evacuated, heated to 400°C by means of the external heating and purged with 5 1/h of inert gas for 20 hours. The weight loss due to the removal of water amounted to 1.2 % by weight.

The reactor temperature was then lowered to 302 - 303°C and gaseous fluorine was slowly introduced into the reactor and absorbed therein while the mixer screw continuously agitated the solid contents of the reactor. The fluorine pressure was regulated such that the pressure in the reactor slowly rose to about 5 bars (abs.) and then up to 6 bars (abs.). The reactor, under continuing agitation, was kept for 6 hours at 305°C. After termination of the reaction, no more fluorine was absorbed, and the pressure in the fluorine supply line became equal to the pressure in the reactor. By weight increase calculations, the manganese fluoride in the reactor was determined to be MnFₓ with x=3.98. The identity was also confirmed by XRD analysis.

### Example 4 : Preparation of manganese tetrafluoride

246 g of manganese difluoride dried overnight at 90°C under vacuum was filled into the reactor. Fluorine was supplied to the reactor, and the temperature in the reactor was slowly brought to about 305°C. The pressure in the supply line was about 5.6 to 5.9 bars (abs.). The pressure in the reactor rose slowly. After about 35 hours, the pressure in the reactor was essentially the same as in the supply line. Fluorine supply was stopped, and the reactor was kept for further 8 hours at about 305°C.

By weight control, it was determined that manganese tetrafluoride had formed.

### Example 5 : Production of elemental fluorine from manganese fluoride

The manganese fluoride obtained in examples 2, 3 and 4 was heated in the reactor to 320 to 400°C by means of the electric heating. Fluorine was split off from the highly fluorinated manganese fluoride and taken from the reactor through the outlet line. The elemental fluorine thus produced can be used for any purpose, e.g. as agent for fluorinating the surface of plastic parts, or as etching agent or as chamber cleaning agent in the semiconductor industry. In the present example, it was passed through potassium iodide solution for analytical purposes. The formed potassium triiodide was analyzed, and the result confirmed that the reaction occurred according to

MnF₄ → MnF₃ and ½ F₂ (III)

### Example 6 : Purification elemental fluorine

Elemental fluorine is produced by electrolysis of anhydrous HF with KF as electrolyte salt. It is purified by contact with KF to remove most of the HF. After this preliminary purification, it is reacted with manganese difluoride at 307°C. When the desired degree of fluorination is achieved, the reactor is evacuated, and gaseous components containing impurities are removed from the reactor through the outlet line. They are passed through a washer comprising potassium iodide to remove residually contained fluorine, HF and the other impurities.

After evacuation, the valve to the vacuum pump is closed, and the reactor is heated to split off elemental fluorine which is highly purified and can be used especially for applications where such purified fluorine is needed, e.g. in the semiconductor industry as etching gas.

The resulting manganese fluoride which roughly had the formula MnFₓ with x = ca. 3 can be fluorinated again in analogy to example 3 (the consumed fluorine is lower because of the higher fluorine content in the starting material).

These steps of fluorination and release of fluorine can be performed many times subsequently without affecting the purity of the elemental fluorine released or the operability of the fluorination process.

## Claims

1. Process for the preparation of manganese tetrafluoride by reacting solid manganese difluoride and/or manganese trifluoride particles with elemental fluorine wherein during the reaction, particle surfaces are rendered fresh essentially without comminuting particles.

2. Process according to claim 1, wherein surfaces of the particles are rendered fresh without applying a ball mill and without applying a rod mill.

3. Process according to claim 1 wherein particle surfaces are rendered fresh contacting them with a stirrer or a mixer screw.

4. Process according to claim 1 wherein a mechanical impact is exerted on the particles which renders fresh surfaces and essentially prevents agglomeration of the particles without comminuting the particles.

5. Process according to claim 4 wherein the mechanical impact is exerted upon the particles during at least 50 % of the reaction time between the manganese difluoride or manganese trifluoride and fluorine.

6. Process according to claim 5 wherein the mechanical impact is achieved by a stirrer or a mixer screw.

7. Process according to claim 6 wherein the stirrer or mixer screw is driven magnetically.

8. Process according to claim 1 wherein the process is performed at a temperature equal to or higher than 160°C, preferably equal to or higher than 180°C.

9. Process according to claim 1 or 8 wherein the process is performed at a temperature equal to or lower than 325°C, preferably equal to or lower than 315°C.

10. Process according to claim 1 wherein the reaction is performed under a pressure equal to or higher than 2 bar (abs.), preferably equal to or higher than 3 bar (abs.).

11. Process according to claim 1 wherein the reaction is performed under a pressure lower than 10 bar (abs), preferably equal to or lower than 8 bar (abs.).

12. Process for the preparation of elemental fluorine wherein manganese difluoride and/or manganese trifluoride is reacted in a step a) according to any one of claims 1 to 11 with elemental fluorine to form manganese tetrafluoride, and in a subsequent step b), elemental fluorine is released from the manganese tetrafluoride prepared in step a), and manganese trifluoride is formed.

13. Process according to claim 12 wherein the manganese trifluoride formed in step b) is subjected to another step a) to form manganese tetrafluoride.

14. Process according to claims 12 and 13 wherein at least five times, manganese tetrafluoride is prepared by subsequent steps a) and b).

15. Process according to any of claims 12 to 14 wherein between steps a) and b), the gas space around the produced manganese tetrafluoride is evacuated, and purified elemental fluorine is produced thereby.

## Patentansprüche

1. Verfahren zur Herstellung von Mangantetrafluorid durch Umsetzung von festen Mangandifluorid- und/oder Mangantrifluoridteilchen mit elementarem Fluor, bei dem man während der Umsetzung Teilchenoberflächen im wesentlichen ohne Zerkleinerung von Teilchen frisch macht.

2. Verfahren nach Anspruch 1, bei dem man die Oberflächen der Teilchen ohne Anwendung einer Kugelmühle und ohne Anwendung einer Stabmühle frisch macht.

3. Verfahren nach Anspruch 1, bei dem man Teilchenoberflächen frisch macht, indem man sie mit einem Rührer oder einer Mischerschnecke in Berührung bringt.

4. Verfahren nach Anspruch 1, bei dem man eine mechanische Einwirkung auf die Teilchen ausübt, die Oberflächen frisch macht und eine Agglomeration der Teilchen im wesentlichen verhindert, ohne die Teilchen zu zerkleinern.

5. Verfahren nach Anspruch 4, bei dem man die mechanische Einwirkung auf die Teilchen während mindestens 50 % der Reaktionszeit zwischen dem Mangandifluorid oder Mangantrifluorid und Fluor ausübt.

6. Verfahren nach Anspruch 5, bei dem man die mechanische Einwirkung mit einem Rührer oder einer Mischerschnecke erreicht.

7. Verfahren nach Anspruch 6, bei dem der Rührer oder die Mischerschnecke magnetisch angetrieben wird.

8. Verfahren nach Anspruch 1, bei dem man das Verfahren bei einer Temperatur größer gleich 160°C, vorzugsweise größer gleich 180°C, durchführt.

9. Verfahren nach Anspruch 1 oder 8, bei dem man das Verfahren bei einer Temperatur kleiner gleich 325°C, vorzugsweise kleiner gleich 315°C, durchführt.

10. Verfahren nach Anspruch 1, bei dem man die Umsetzung unter einem Druck größer gleich 2 bar (abs.), vorzugsweise größer gleich 3 bar (abs.), durchführt.

11. Verfahren nach Anspruch 1, bei dem man die Umsetzung unter einem Druck kleiner 10 bar (abs.), vorzugsweise kleiner gleich 8 bar (abs.), durchführt.

12. Verfahren zur Herstellung von elementarem Fluor, bei dem man Mangandifluorid und/oder Mangantrifluorid in einem Schritt a) gemäß einem der Ansprüche 1 bis 11 mit elementarem Fluor zu Mangantetrafluorid umsetzt und in einem nachfolgenden Schritt b) aus dem in Schritt a) hergestellten Mangantetrafluorid elementares Fluor freisetzt und Mangantrifluorid bildet.

13. Verfahren nach Anspruch 12, bei dem man das in Schritt b) gebildete Mangantrifluorid einem weiteren Schritt a) zur Bildung von Mangantetrafluorid unterwirft.

14. Verfahren nach den Ansprüchen 12 und 13, wobei man mindestens fünfmal Mangantetrafluorid durch aufeinanderfolgende Schritte a) und b) herstellt.

15. Verfahren nach einem der Ansprüche 12 bis 14, bei dem man zwischen den Schritten a) und b) den Gasraum um das hergestellte Mangantetrafluorid evakuiert und **dadurch** gereinigtes elementares Fluor herstellt.

## Revendications

1. Procédé de préparation de tétrafluorure de manganèse par réaction de particules solides de difluorure de manganèse et/ou de trifluorure de manganèse avec du fluor élémentaire dans lequel, pendant la réaction, les surfaces des particules sont rendues fraîches sans pratiquement broyer les particules.

2. Procédé selon la revendication 1 dans lequel les surfaces des particules sont rendues fraîches sans appliquer un broyeur à boulets et sans appliquer un broyeur à barres.

3. Procédé selon la revendication 1 dans lequel les surfaces des particules sont rendues fraîches en les mettant en contact avec un agitateur ou une vis de mélangeur.

4. Procédé selon la revendication 1 dans lequel un impact mécanique est exercé sur les particules, lequel rend les surfaces fraîches et empêche pratiquement l'agglomération des particules sans broyer les particules.

5. Procédé selon la revendication 4 dans lequel l'impact mécanique est exercé sur les particules pendant au moins 50 % du temps de réaction entre le difluorure de manganèse ou trifluorure de manganèse et le fluor.

6. Procédé selon la revendication 5 dans lequel l'impact mécanique est obtenu par un agitateur ou une vis de mélangeur.

7. Procédé selon la revendication 6 dans lequel l'agitateur ou la vis de mélangeur est entraîné magnétiquement.

8. Procédé selon la revendication 1, le procédé étant mis en oeuvre à une température égale ou supérieure à 160°C, de préférence égale ou supérieure à 180°C.

9. Procédé selon la revendication 1 ou 8, le procédé étant mis en oeuvre à une température égale ou inférieure à 325°C, de préférence égale ou inférieure à 315°C.

10. Procédé selon la revendication 1 dans lequel la réaction est effectuée sous une pression égale ou supérieure à 2 bar (abs.), de préférence égale ou supérieure à 3 bar (abs.).

11. Procédé selon la revendication 1 dans lequel la réaction est effectuée sous une pression inférieure à 10 bar (abs.), de préférence égale ou inférieure à 8 bar (abs.).

12. Procédé de préparation de fluor élémentaire dans lequel du difluorure de manganèse et/ou du trifluorure de manganèse sont mis à réagir dans une étape a) selon l'une quelconque des revendications 1 à 11 avec du fluor élémentaire pour former du tétrafluorure de manganèse, et dans une étape b) consécutive, du fluor élémentaire est libéré du tétrafluorure de manganèse préparé à l'étape a), et du trifluorure de manganèse est formé.

13. Procédé selon la revendication 12 dans lequel le trifluorure de manganèse formé à l'étape b) est soumis à une autre étape a) pour former du tétrafluorure de manganèse.

14. Procédé selon les revendications 12 et 13 dans lequel, au moins cinq fois, du tétrafluorure de manganèse est préparé par des étapes a) et b) consécutives.

15. Procédé selon l'une quelconque des revendications 12 à 14 dans lequel, entre les étapes a) et b), l'espace gazeux autour du tétrafluorure de manganèse produit est évacué, et du fluor élémentaire purifié est ainsi produit.
